(19) Europäisches Patentamt
European Patent Office
Office européen des brevets

(11) **EP 1 355 960 B1**

(12) **FASCICULE DE BREVET EUROPEEN**

(45) Date de publication et mention
de la délivrance du brevet:
**03.12.2008 Bulletin 2008/49**

(51) Int Cl.:
***C08F 136/08*** *(2006.01)*   ***C08F 136/04*** *(2006.01)*
***C08F 4/54*** *(2006.01)*

(21) Numéro de dépôt: **01993635.0**

(22) Date de dépôt: **07.11.2001**

(86) Numéro de dépôt international:
**PCT/EP2001/012883**

(87) Numéro de publication internationale:
**WO 2002/038636 (16.05.2002 Gazette 2002/20)**

(54) **SYSTEME CATALYTIQUE ET PROCEDE DE PREPARATION D'ELASTOMERES AU MOYEN DE CE SYSTEME**

KATALYTISCHES SYSTEM UND VERFAHREN ZUR HERSTELLUNG VON ELASTOMEREN UNTER VERWENDUNG DIESES SYSTEMS

CATALYTIC SYSTEM AND METHOD FOR PREPARING ELASTOMERS USING SAME

(84) Etats contractants désignés:
**AT BE CH CY DE DK ES FI FR GB GR IE IT LI LU MC NL PT SE TR**

(30) Priorité: **09.11.2000 FR 0014517**

(43) Date de publication de la demande:
**29.10.2003 Bulletin 2003/44**

(73) Titulaires:
• **Société de Technologie Michelin**
  **63000 Clermont-Ferrand Cedex 09 (FR)**
• **Michelin Recherche et Technique S.A.**
  **1763 Granges-Paccot (CH)**

(72) Inventeur: **LAUBRY, Philippe**
**Greer, SC 29650 (US)**

(74) Mandataire: **Bolinches, Michel Jean-Marie**
**M.F.P.**
**Michelin**
**SGD/LG/PI - F35 - Ladoux**
**F-63040 Clermont-Ferrand Cedex 09 (FR)**

(56) Documents cités:
**EP-A- 0 304 088**      **EP-A- 0 846 707**
**US-A- 3 794 604**

**Description**

La présente invention concerne un système catalytique utilisable pour préparer par polymérisation des élastomères diéniques comprenant des polyisoprènes et des polybutadiènes, un procédé de préparation dudit système catalytique et un procédé de préparation, au moyen de ce système catalytique, de tels élastomères diéniques comprenant des polyisoprènes à taux élevés d'enchaînements cis-1,4 et des polybutadiènes.

Pour la préparation de polyisoprènes présentant un taux élevé d'enchaînements cis-1,4, il est connu d'utiliser des systèmes catalytiques à base :

- d'un sel de terre rare en solution dans un solvant hydrocarboné,
- d'un agent d'alkylation de ce sel constitué d'un alkylaluminium, et
- d'un halogénure d'un alkylaluminium.

Il est par exemple connu, d'après le document « Compte-rendu de l'Académie des Sciences d'U. R. S. S., tome 234, n˚5, 1977 (Y. B. Monakov, Y. R. Bieshev, A. A. Berg, S. R. Rafikov) » d'utiliser, pour la polymérisation de l'isoprène, un système catalytique comprenant:

- un sel de néodyme ou de praséodyme de l'acide bis(2-éthylhexyl)phosphorique, à titre de sel de terre rare, en solution dans du toluène,
- du triisobutylaluminium à titre d'agent d'alkylation, selon un rapport molaire (agent d'alkylation / sel de terre rare) égal à 20, et
- du chlorure de diéthylaluminium à titre d'halogénure d'un alkylaluminium.

On peut également citer le document « Proceedings of China - U. S. Bilateral Symposium on Polymer Chemistry and Physics, Science Press, pp. 382-398, 1981 (O. Jun, W. Fosong, S. Zhiquan) ». Ce document enseigne l'utilisation d'un sel de néodyme de l'acide bis(2-éthylhexyl)phosphorique, en association avec du triéthylaluminium ou du triisobutylaluminium, et un halogénure d'alkylaluminium de formule $Al_2(C_2H_5)_3Cl_3$.

Le document de brevet américain US-A-3 794 604 décrit dans ses exemples de réalisation un système catalytique de type «préformé» en présence d'un monomère diène conjugué, comprenant :

- du butadiène ou de l'isoprène à titre de monomère diène conjugué,
- de l'octanoate de cérium à titre de sel de terre rare en solution dans du benzène,
- de l'hydrure de diisobutyl aluminium à titre d'agent d'alkylation, selon un rapport molaire (agent d'alkylation / sel de terre rare) sensiblement égal à 20, et
- du dichlorure d'éthylaluminium à titre d'halogénure d'alkylaluminium.

On notera que les seuls exemples de polymérisation figurant dans ce document américain se rapportent à la polymérisation du butadiène.

Le document de brevet japonais JP-A-60/23406 décrit également un système catalytique de type « préformé » en présence de butadiène, qui est spécifiquement prévu pour la polymérisation du butadiène. Les systèmes catalytiques qui ont été testés dans les exemples de réalisation de ce document comprennent :

- un sel de néodyme de l'acide bis(2-éthylhexyl)phosphorique à titre de sel de terre rare en solution dans du n-hexane ou du cyclohexane,
- du triisobutylaluminium ou de l'hydrure de diisobutyl aluminium à titre d'agent d'alkylation, selon un rapport molaire (agent d'alkylation / sel de terre rare) qui varie de 10 à 30, et
- du sesquichlorure d'éthylaluminium à titre d'halogénure d'alkylaluminium.

On notera qu'aucun des polybutadiènes obtenus au moyen de ces systèmes catalytiques ne présente à la fois une viscosité Mooney ML(1+4) à 100˚ C égale ou supérieure à 40 et un indice de polydispersité inférieur à 2,5. Il en résulte que ces polybutadiènes ne sont pas adaptés pour être utilisés dans une bande de roulement d'enveloppe de pneumatique.

Un inconvénient majeur de ces systèmes catalytiques connus est qu'ils présentent des activités inégales pour la polymérisation de l'ensemble des diènes conjugués, en particulier pour l'homopolymérisation de l'isoprène et pour celle du butadiène.

Un autre inconvénient réside dans la non-reproductibilité des caractéristiques de macrostructure et de microstructure que présentent les polymères obtenus au moyen de ces systèmes catalytiques, en particulier pour les taux d'enchaînements cis-1,4 qui peuvent varier d'une manière significative.

La demanderesse a découvert d'une manière inattendue qu'un système catalytique de typo « préformé » à base d'au moins:

- un monomère diène conjugué,
- un sel d'un ou de plusieurs métaux de terre rare (métaux ayant un numéro atomique compris entre 57 et 71 dans le tableau périodique des éléments de Mendeleev) d'un acide phosphorique organique, ledit sel étant en suspension dans au moins un solvant hydrocarboné inerte, saturé et de type aliphatique ou alicyclique,
- un agent d'alkylation constitué d'un alkylaluminium choisi parmi les trialkylaluminiums et les hydrures de dialkylaluminium, le rapport molaire (agent d'alkylation / sel de terre rare) présentant une valeur allant de 1 à 5, et
- un donneur d'halogène constitué d'un halogénure d'alkylaluminium,

permet de remédier aux inconvénients précités en présentant une forte activité pour l'obtention d'élastomères diéniques, tels que des polyisoprènes et des polybutadiènes, et en particulier de polyisoprènes présentant, d'une part, une large gamme de viscosités et, d'autre part, des taux d'enchaînements cis-1,4 reproductibles et élevés dans une plage allant sensiblement de 98,0 % à 98,5%.

Bien entendu, par l'expression « à base de » utilisée pour définir les constituants du système catalytique, on entend le mélange de ces constituants et/ou le produit de la réaction entre ces constituants.

De préférence, ledit rapport molaire (agent d'alkylation / sel de terre rare) présente une valeur allant de 1 à 2. Le système catalytique correspondant selon l'invention permet en particulier d'obtenir des polyisoprènes présentant les propriétés précitées avec une très forte activité catalytique.

On notera que les systèmes catalytiques selon l'invention sont caractérisés par un rapport molaire (agent d'alkylation / sel de terre rare) qui est très réduit par rapport aux rapports molaires égaux ou supérieurs à 10 ou à 20 qui ont été réellement testés à ce jour ce qui, d'une manière surprenante, permet d'élever d'une manière significative l'activité de ces systèmes catalytiques selon l'invention pour l'obtention de polyisoprènes.

A titre de monomère diène conjugué utilisable pour «préformer» le système catalytique selon l'invention, on peut citer le 1, 3-butadiène, à titre préférentiel.

On peut également citer le 2-méthyl 1, 3-butadiène (ou isoprène), les 2, 3-di (alcoyle en C1 à C5) 1, 3-butadiène tels que par exemple le 2, 3 diméthyl-1, 3-butadiène, le 2, 3-diéthyl-1, 3-butadiène, le 2-méthyl 3-éthyl 1, 3-butadiène, le 2-méthyl 3-isopropyl 1, 3-butadiène, le phényl 1, 3-butadiène, le 1, 3-pentadiène, le 2, 4-hexadiène, ou tout autre diène conjugué ayant entre 4 et 8 atomes de carbone.

On notera que le rapport molaire (monomère / sel de terre rare) peut présenter une valeur allant de 25 à 50.

Selon une autre caractéristique de l'invention, ledit sel de terre rare est constitué d'une poudre non hygroscopique ayant une légère tendance à s'agglomérer à la température ambiante.

- Selon un mode préférentiel de réalisation de l'invention, le solvant hydrocarboné inerte dans lequel ledit sel de terre rare est en suspension est un solvant aliphatique ou alicyclique de bas poids moléculaire, tel que le cyclohexane, le méthylcyclohexane, le n-heptane, ou un mélange de ces solvants.

- Selon un autre mode de réalisation de l'invention, le solvant utilisé pour la suspension du sel de terre rare est un mélange d'un solvant aliphatique de haut poids moléculaire comprenant une huile paraffinique, par exemple de, l'huile de vaseline, et d'un solvant de bas poids moléculaire tel que ceux susmentionnés (par exemple le cyclohexane ou le méthylcyclohexane).

On réalise cette suspension en procédant à un broyage dispersif du sel de terre rare dans cette huile paraffinique, de sorte à obtenir une suspension très fine et homogène du sel.

Selon une autre caractéristique de l'invention, ledit système catalytique comprend le métal de terre rare selon une concentration égale ou sensiblement égale à 0,02 mol/1.

Selon un autre caractéristique de l'invention, ledit système catalytique est tel que ledit sel de terre rare présente une teneur massique en métal de terre rare allant de 12,0 % à 13,5 %, déterminée à la fois par la technique de titrage complexométrique en retour par l'acide diéthylène diamine tétracétique (EDTA en abrégé) et par la technique de spectrométrie d'émission atomique couplée à un plasma induit (ICP/AES en abrégé).

Les systèmes catalytiques selon l'invention qui sont caractérisés par ces teneurs en métal de terre rare pour ledit sel permettent avantageusement d'obtenir des polybutadiènes présentant à la fois une viscosité Mooney ML(1+4) à 100° C, mesurée selon la norme ASTM D 1646, qui est égale ou supérieure à 40, et un indice de polydispersité, mesuré par la technique de chromatographie d'exclusion par la taille (technique SEC), qui est inférieur à 2,5, ces caractéristiques combinées rendant ces polybutadiènes particulièrement bien adaptés pour être utilisés dans des bandes de roulement d'enveloppe de pneumatique.

De préférence, ledit sel de terre rare présente une teneur massique en métal de terre rare allant de 12,5 % à 13,2 %.

Avantageusement, les polybutadiènes obtenus présentent à la fois une viscosité Mooney ML(1+4) à 100˚ C supérieure à 40 et un indice de polydispersité inférieur à 2,0.

Selon un exemple préférentiel de réalisation de l'invention, on utilise à titre de sel un tris[bis(2-éthylhexyl) phosphate] dudit ou desdits métaux de terre rare.

A titre encore plus préférentiel, ledit sel de terre rare est le tris[bis(2-éthylhexyl)phosphate] de néodyme.

A titre d'agent d'alkylation utilisable dans le système catalytique selon l'invention, on peut citer des alkylaluminiums tels que:

- des trialkylaluminiums, par exemple le triisobutylaluminium, ou
- des hydrures de dialkylaluminium, par exemple l'hydrure de diisobutylaluminium.
  On notera que cet agent d'akylation est de préférence constitué de l'hydrure de diisobutylaluminium.

A titre de donneur d'halogène utilisable dans le système catalytique selon l'invention, on peut citer des halogénures d'alkylaluminium, de préférence le chlorure de diéthylaluminium.

On notera que le rapport molaire (donneur d'halogène / sel de terre rare) peut présenter une valeur allant de 2,2 à 3 et, de préférence, allant de 2,6 à 3.

Selon l'invention, le procédé de préparation dudit système catalytique consiste:

- dans une première étape, à réaliser une suspension dudit sel de terre rare dans ledit solvant,
- dans une seconde étape, à ajouter à la suspension ledit monomère diène conjugué,
- dans une troisième étape, à ajouter ledit agent d'alkylation à la suspension comprenant ledit monomère pour l'obtention d'un sel alkylé, et
- dans une quatrième étape, à ajouter ledit donneur d'halogène au sel alkylé.

Le procédé de préparation selon l'invention d'élastomères diéniques consiste à faire réagir ledit système catalytique dans un solvant hydrocarboné inerte et en présence du ou des monomères à polymériser, pour l'obtention d'un élastomère diénique pouvant être tout homopolymère ou copolymère obtenu par homopolymérisation ou copolymérisation d'un monomère diène conjugué ayant de 4 à 12 atomes de carbone.

A titre de monomère diène conjugué conviennent notamment le butadiène-1,3, l'isoprène, les 2,3-di(alkyle en C1 à C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

L'élastomère diénique obtenu par le procédé de polymérisation selon l'invention est caractérisé par un taux élevé d'enchaînements cis-1,4, et il peut être par exemple constitué d'un polyisoprène (IR) ou d'un polybutadiène (BR).

Avantageusement, le procédé selon l'invention permet d'obtenir avec une activité élevée, lorsque la polymérisation est réalisée à une température allant de 25˚ C à 55˚ C, des polyisoprènes présentant des taux d'enchaînements cis-1,4, mesurés à la fois selon la technique de résonance magnétique nucléaire du carbone 13 et selon la technique de dosage pair moyen infrarouge, qui appartiennent à un domaine allant de 98,0 % à 98,5 % (à l'incertitude de mesure de plus ou moins 0,1 % près qui est inhérente à chacune de ces deux techniques).

De plus, ce procédé selon l'invention permet également d'obtenir avec une activité élevée, lorsque la polymérisation est réalisée à une température allant de 25˚ C à 100˚ C, des polybutadiènes présentant également des taux d'enchaînements cis-1,4 élevés, ainsi qu'une viscosité inhérente, mesurée à une concentration de 0,1 g/dl dans le toluène, qui est supérieure à 2 dl/g (cette viscosité inhérente étant mesurée selon la norme ASTM D 1646).

Avantageusement, ledit rapport molaire (agent d'alkylation / sel de terre rare) présente une valeur allant de 1 à 2, pour l'obtention de polybutadiènes avec une activité catalytique améliorée et présentant des taux d'enchaînements cis-1,4, mesurés par la technique de dosage par proche infrarouge (NIR), qui peuvent être compris entre 98,0 % et 99,0 %.

On se reportera à l'annexe 1 jointe pour une description de cette technique NIR.

Les caractéristiques précitées de la présente invention, ainsi que d'autres, seront mieux comprises à la lecture de la description suivante de plusieurs exemples de réalisation de l'invention, donnés à titre illustratif et non limitatif, ladite description étant réalisée en relation avec les dessins joints, parmi lesquels:

la Fig. 1 est un graphique illustrant l'influence du rapport molaire (agent d'alkylation /sel de terre rare) sur l'activité de 8 systèmes catalytiques selon l'invention pour la préparation de polyisoprènes présentant une même viscosité inhérente d'environ 4 dl/g, et

la Fig. 2 est un graphique illustrant l'influence du rapport molaire (agent d'alkylation /sel de terre rare) sur l'activité de 6 systèmes catalytiques selon l'invention pour la préparation de polybutadiènes présentant une viscosité inhérente comprise entre 2,6 et 2,8 dl/g.

## I. <u>PREPARATION DE SYSTEMES CATALYTIQUES SELON L'INVENTION:</u>

### 1) <u>Synthèse d'un sel de phosphate organique de néodyme selon l'invention :</u>

On a réalisé une pluralité d'essais pour la synthèse de ce sel. On a utilisé pour chacun de ces essais une même méthode de synthèse, qui est détaillée ci-après.

a) <u>Synthèse d'une solution aqueuse de néodyme $NdCl_3$, $6H_2O$ :</u>

Dans un bécher de 600 ml de forme «haute», on pèse 96 g de $Nd_2O_3$ (commercialisé par la société RHODIA), qui a été dosé par complexométrie à 85,3 % en Nd (85,7 % en théorie), soit présentant 0,57 mol de Nd.
On ajoute 80 ml d'eau déminéralisée. Sous une hotte aspirante, avec une agitation magnétique et à température ambiante, on ajoute lentement 150 ml d'HCl concentré à 36 % en poids (d =1,18), soit 1,75 mol d'HCl (rapport molaire HCl/Nd = 1,75/0,57 = 3,07).
La réaction $Nd_2O_3$ + 6 HCl + 9 $H_2O \rightarrow$ 2 $NdCl_3$, $6H_2O$ est très exothermique.
Lorsque tout l'acide chlorhydrique a été ajouté, on porte la solution à ébullition sous agitation magnétique, pour éliminer l'excès d'acide chlorhydrique. La solution aqueuse de $NdCl_3$ est limpide et de couleur mauve. Il ne reste pas de produit insoluble ($Nd_2O_3$).
On procède ensuite à l'évaporation de cette solution jusqu'à obtenir un volume d'environ 130 ml dans le bécher. La solution de $NdCl_3$, $6H_2O$ est alors très concentrée (elle cristallise à température ambiante).
Puis on verse dans un bidon de 10 litres contenant 4500 ml d'eau déminéralisée la solution concentrée de $NdCl_3$ sous agitation et à température ambiante (en utilisant un moteur avec agitateur en forme d'ancre).
Le pH de la solution, mesuré à 25° C, est voisin de 4.
Puis on ajoute à la solution 1500 ml d'acétone technique. Il ne reste pas de produit insoluble, et la solution ainsi obtenue est de couleur rose.

b) <u>Synthèse d'un phosphate organique de sodium de formule $[RO]_2P(O)ONa$ (R=2-éthylhexyl):</u>

Dans un bécher de 5 litres contenant 1500 ml d'eau déminéralisée, on dissout 68 g de NaOH en pastilles, soit 1,70 mol. Dans un autre bécher de 3 litres contenant 500 ml d'acétone, on dissout 554 g d'un acide phosphorique organique (l'acide bis(2-éthylhexyl) phosphorique, répertorié dans l'ouvrage « Aldrich » sous la référence 23,782-5), soit 1,72 mol de cet acide. Le rapport molaire NaOH / acide phosphorique organique est de 1,70 /1,72, soit 0,99.
A température ambiante et en agitant à la main à l'aide d'un agitateur en verre, on verse la solution dudit acide phosphorique organique dans la solution de NaOH. La réaction est la suivante :

$$[RO]_2P(O)OH + NaOH \rightarrow [RO]_2P(O)ONa + H_2O.$$

Elle est légèrement exothermique, et l'on obtient une solution homogène de couleur jaunâtre. Le pH de la solution, mesuré à 25° C, est voisin de 7.

c) <u>Synthèse d'un sel phosphaté de néodyme de formule $[[RO]_2P(O)O]_3Nd$:</u>

- On verse sous vive agitation (moteur avec agitateur en forme d'ancre) et à température ambiante la solution de phosphate organique de Na obtenue au paragraphe b) ci-dessus dans la solution aqueuse de $NdCl_3$,$6H_2O$ obtenue au paragraphe a) ci-dessus.
Il se forme immédiatement un précipité blanc très fin. On maintient le mélange obtenu sous agitation pendant 30 minutes, après l'addition de tout le phosphate organique de Na (selon un rapport molaire $(RO)_2P(O)ONa/NdCl_3$ = 1,70/0,57 = 2,98). La réaction est la suivante :

$$3 [RO]_2P(O)ONa + NdCl_3,6H_2O \rightarrow Nd[OP(O)[OR]_2]_3 + 3 NaCl + 6 H_2O.$$

- On récupère et on lave le sel phosphaté de néodyme ainsi obtenu dans une centrifugeuse équipée d'une "chaussette".

Le pH des eaux « mères » est compris entre 3 et 4 à 25° C. Ces eaux « mères » sont incolores et limpides.
On-scinde en deux échantillons-le sel obtenu, puis on lave chaque échantillon avec un mélange acétone/ eau déminéralisée en réalisant trois fois le cycle de lavage décrit ci-dessous, afin d'éliminer tous les chlorures.

Chaque cycle de lavage est réalisé dans un seau de 10 litres en matière plastique contenant initialement 2 litres d'acétone. On procède à l'homogénéisation de chaque échantillon et de l'acétone au moyen d'un homogénéiseur « Ultra-Turrax » pendant environ 1 minute, afin d'obtenir une solution de type lait.

On ajoute ensuite 4 litres d'eau déminéralisée dans le seau, puis on homogénéise le mélange obtenu au moyen du même homogénéiseur pendant 3 minutes.

On procède à la centrifugation du mélange ainsi obtenu puis on récupère le sel phosphaté de néodyme dans la "chaussette".

Sur la dernière eau de lavage, le test analytique qualitatif des chlorures est quasi-négatif (la réaction est: NaCl + AgNO$_3$ (milieu HNO$_3$) $\rightarrow$ AgCl $\downarrow$ + NaNO$_3$).

On sèche le sel de néodyme ainsi lavé dans une étuve à 60° C, sous vide et avec courant d'air pendant environ 80 heures.

Le rendement final pour chacun des essais de synthèse réalisés est compris entre 95 % et 98 %, suivant les pertes dues aux lavages. On obtient à chaque fois environ 600 g de sel phosphaté de néodyme à l'état sec.

Les teneurs massiques en néodyme, déterminées à la fois par la technique de titrage complexométrique en retour par l'acide diéthylène diamine tétracétique (EDTA) et par la technique de spectrométrie d'émission atomique couplée à un plasma induit (ICP/AES), sont sensiblement comprises entre 12,5 % et 12,8 % (pour un taux théorique $\tau$ de 13,01 %, avec $\tau$ = [144,24 / 1108,50] x 100, où 144,24 g/mol = masse molaire du néodyme).

Pour chacune de ces deux techniques, les mesures de teneur en néodyme ont été effectuées après minéralisation acide du sel par voie humide, soit sur bain de sable en système ouvert, soit en micro-ondes en système fermé.

La technique de titrage complexométrique par l'EDTA en retour consiste en un titrage en retour avec complexation du néodyme, par un excès d'EDTA (l'acide diéthylène diamine tétracétique), dans lequel on dose l'EDTA en excès à pH=4,6 par du sulfate de zinc.

On a utilisé un indicateur coloré avec détection photométrique du point d'équivalence.

La technique de spectrométrie d'émission atomique couplée à un plasma induit est une technique d'analyse élémentaire basée sur l'observation des raies émises par des atomes parvenus dans un état excité au sein d'un plasma.

Les raies d'émission qui ont été utilisées pour l'analyse du néodyme correspondent à des longueurs d'onde de 406,109 nm et 401,225 nm.

Pour mettre en oeuvre cette technique de spectrométrie, on a réalisé un étalonnage préalable avec des sels « témoin » de néodyme présentant une teneur connue en néodyme.

Le tableau ci-dessous rend compte des teneurs en Nd obtenues au moyen de ces deux techniques (le nombre d'essais réalisés sur chaque échantillon de sel figure entre parenthèses).

| Echantillons de sels analysés | Taux de Nd en % obtenus par titrage complexométrique | Taux de Nd en % obtenus par ICP/AES | Ecart relatif entre les 2 techniques |
|---|---|---|---|
| sel phosphaté de Nd [[RO]$_2$P(O)O]$_3$Nd | 12,8 (9) | 12,8 (3) | 0 % |
| sel phosphaté de Nd [[RO]$_2$P(O)O]$_3$Nd | 12,8 (4) | 12,6(3) | 1,6 % |
| sel phosphaté de Nd [[RO]$_2$P(O)O]$_3$Nd | 12,7 (6) | 12,2 (4) | 4 % |
| sel phosphaté de Nd [[RO]$_2$P(O)O]$_3$Nd | 12,6 (6) | 12,5 (4) | 0,8% |
| Acétyl acétonate de Nd « témoin » | 31,7 (6) | 32,4 (4) | 2,2 % |
| Oxalate de Nd « témoin » | 37,7 (3) | 38,0 (3) | 0,8 % |

Les résultats obtenus par les deux techniques sont comparables (écart relatif < 4%).

**2) Synthèse de systèmes catalytiques préformés « témoin » et selon l'invention:**

a) Composition de systèmes catalytiques « témoin » t et t'.

Le système catalytique « témoin » t est à base :

- de butadiène à titre de monomère diène conjugué
- d'octoate de néodyme à titre de sel de terre rare,
- d'hydrure de diisobutylaluminium (HDiBA ci-après) à titre d'agent d'alkylation, et
- de chlorure de diéthylaluminium (CDEA ci-après) à titre de donneur d'halogène.

Ce système catalytique t est caractérisé par les rapports molaires relatifs suivants, par rapport au sel de néodyme :
Octoate de Nd / butadiène / HDiBA / CDEA = 1 / 30 / 1,8 / 2,6.
Le système catalytique « témoin » t' se différencie uniquement de ce système catalytique t, en ce qu'il comprend de l'acétylacétonate de néodyme à la place de l'octoate de néodyme, à titre de sel de terre rare (les rapports molaires relatifs par rapport au sel de néodyme étant identiques).
Dans ces deux systèmes catalytiques t et t', le sel de néodyme est en suspension dans un solvant hydrocarboné inerte de bas poids moléculaire, constitué de méthylcyclohexane.

b) Composition de systèmes catalytiques 1 à 29 selon l'invention:

Chacun de ces systèmes 1 à 29 comprend un sel phosphaté de néodyme tel que synthétisé selon le paragraphe 1) ci-dessus.

- Une première série de systèmes catalytiques selon l'invention (systèmes 1 à 13 et 27 à 29 ci-après) est telle que le sel phosphaté de néodyme est en suspension dans un solvant hydrocarboné inerte de bas poids moléculaire (constitué de méthylcyclohexane, de n-heptane ou de cyclohexane).
- Une seconde série de systèmes catalytiques selon l'invention (systèmes 14 à 26 ci-après) est telle que le sel phosphaté de néodyme est en suspension dans un mélange de deux solvants hydrocarbonés inertes, de bas poids et de haut poids moléculaire, respectivement (mélange d'huile de vaseline de type « Prolabo qualité Rectapur » et de cyclohexane ou de méthylcyclohexane).

On réalise cette suspension dans le mélange de ces deux solvants en procédant, dans un premier temps, à un broyage dispersif pendant une minute du sel phosphaté de néodyme dans ladite huile au moyen d'un homogénéiseur de type "ultra-turrax", pour l'obtention d'une suspension très fine, homogène et relativement stable (plusieurs jours étant nécessaires pour observer un début de sédimentation du solide). La manipulation en termes de prise d'essai est donc facilitée.
Dans un second temps, on ajoute le cyclohexane ou le méthylcyclohexane à la suspension obtenue, ce qui a pour effet d'élever sensiblement la viscosité et de conduire éventuellement à la formation d'un gel à l'état plus ou moins liquide.
Les systèmes catalytiques 1 à 29 selon l'invention sont caractérisés par les rapports molaires relatifs suivants, par rapport au sel de néodyme :

Octoate / butadiène / HDiBA / CDEA = 1 / 25 à 50 / 1,3 à 4,5 / 2,6 ou 3.

c) Procédé de synthèse commun aux systèmes catalytiques « témoin » et de l'invention:

- Première étape :

En vue de l'obtention des systèmes catalytiques t, t', 1 à 13 et 27 à 29, on verse 15,6 g du sel de néodyme, à l'état de poudre, dans un réacteur de 1 litre préalablement nettoyé de ses impuretés. On soumet ensuite ce sel à un barbotage à l'azote par le fond du réacteur, pendant une durée de 15 min.
En vue de l'obtention des systèmes catalytiques 14 à 26, on réalise au préalable la suspension précitée du sel phosphaté de néodyme dans l'huile de vaseline, selon une fraction massique de 10 % pour ledit sel. Puis on fait barboter à l'azote cette suspension du sel dans l'huile pendant une durée de 5 min. On verse ensuite la suspension ainsi obtenue dans un réacteur identique au précédent, préalablement nettoyé de ces impuretés et mis sous atmosphère d'azote.

- Seconde étape :

On introduit 90 % (fraction massique) du solvant mentionné aux paragraphes a) et b) ci-dessus dans le réacteur contenant le sel de néodyme, ce solvant étant le méthylcyclohexane pour la synthèse des systèmes catalytiques t, t', le méthylcyclohexane ou le n-heptane pour les systèmes catalytiques 1 à 13 et 29, et le cyclohexane ou le méthylcyclohexane pour les systèmes catalytiques 14 à 28.

La durée et la température de mise en contact de ce solvant et du sel de néodyme sont respectivement, pour les systèmes catalytiques t, t', 1 à 1.3 et 29, de 30 min. et 30° C, pour les systèmes catalytiques 14 à 27, de 4 h et 60° C et, pour le système catalytique 28, de 2 h et 60° C.

- Troisième étape :

On introduit ensuite du butadiène dans le réacteur (selon les rapports molaires précités aux paragraphes a) et b) ci-dessus), à une température de 30° C, en vue de la « préformation » de chaque système catalytique.

- Quatrième étape :

On introduit ensuite dans le réacteur de l'hydrure de diisobutylaluminium (HDiBA) à titre d'agent d'alkylation du sel de néodyme, selon une concentration d'environ 1 M, ainsi qu'une quantité du solvant précité à la seconde étape correspondant à une fraction massique de 5 % de la totalité dudit solvant. La durée de l'alkylation est de 15 min pour les systèmes catalytiques t, t', 1 à 9, 14 à 28, et de 30 min. pour les autres systèmes catalytiques 10 à 13 et 29 (voir paragraphe II. ci-après). La température de la réaction d'alkylation est de 30° C.

- Cinquième étape :

On introduit ensuite dans le réacteur du chlorure de diéthylaluminium (CDEA) à titre de donneur d'halogène, selon une concentration d'environ 1 M, ainsi qu'une quantité du solvant précité à la seconde étape correspondant à la fraction massique restante de 5 % de la totalité dudit solvant. La température du milieu réactionnel est portée à 60° C.

- Sixième étape :

On procède ensuite à une « préformation » (ou vieillissement) du mélange ainsi obtenu en maintenait cette température de 60° C pendant une durée de 120 min, excepté pour le système catalytique 11 où elle est maintenue pendants 60 min. seulement (voir paragraphe II.).

- Septième étape :

On obtient ainsi environ 700 ml d'une solution de système catalytique t, t' ou 1 à 29. On procède à la vidange du réacteur et l'on transfère cette solution dans une bouteille "Steinie" de 750 ml, préalablement lavée, séchée et soumise à un barbotage à l'azote.

On stocke finalement la solution catalytique sous atmosphère d'azote dans un congélateur, à la température de -15° C.

## II. Polymérisation de l'isoprène au moyen des systèmes catalytiques t, t' et 1 à 16:

### 1) Mode opératoire suivi pour les diverses polymérisations:

On a utilisé, à titre de réacteur de polymérisation, une bouteille "Steinie" de 250 ml (sauf pour les second et troisième exemples de polymérisation au moyen du système catalytique 5, où l'on utilise une bouteille « Steinie » de 750 ml, voir tableau ci-après). On a mis en oeuvre chaque réaction de polymérisation en soumettant cette bouteille à une agitation dans un bac à eau.

On a utilisé une coupe de vapocraquage de naphta en C5, dans le but d'en extraire de l'isoprène présentant une pureté proche de 100 %. A cet effet, on a procédé à une purification classique en laboratoire, consistant successivement en :

- une distillation de cette coupe C5 sur de l'anhydride maléique pour éliminer le cyclopentadiène résiduel, suivie
- d'un passage sur une colonne d'alumine pour éliminer les impuretés polaires, et
- d'un barbotage à l'azote pendant 20 min., juste avant la réaction de polymérisation. On a déterminé, par la technique de chromatographie en phase gazeuse (CPG), la fraction massique de l'isoprène extrait de cette coupe C5, qui est de 99,2 %.

Chaque réaction de polymérisation de l'isoprène (on utilise 10 g d'isoprène par bouteille, sauf pour les second et troisième exemples avec le système catalytique 5, où l'on utilise 36 g d'isoprène) est effectuée dans le cyclohexane à 50° C (pour ledit troisième exemple avec le système catalytique 5, la température est de 30° C) et sous atmosphère inerte (azote). On a utilisé un rapport massique « solvant de polymérisation (cyclohexane) monomère (isoprène) » égal à 9 (ce rapport massique est appelé S/M ci-après).

La quantité de base catalytique en néodyme varie de 90 $\mu$mol à 600 $\mu$mol pour 100 g d'isoprène, suivant l'essai réalisé (cette quantité est exprimée en $\mu$Mcm dans les tableaux récapitulatifs ci-après). On notera que cette quantité de néodyme est ajustée suivant la valeur du rapport (agent d'alkylation / sel de terre rare), en vue de l'obtention de viscosités inhérentes finales qui sont sensiblement identiques pour les polyisoprènes obtenus.

L'étanchéité de la bouteille est assurée par un ensemble de type "joint-capsule percée" permettant ainsi l'ajout de chaque système catalytique à l'aide d'une seringue.

L'acétylacétone est utilisée selon un volume de 1 ml comme agent de stoppage de la réaction de polymérisation, et la N-1,3-diméthylbutyl-N'-phényl-p-phénylènediamine (6PPD) comme agent de protection (selon un volume de 2 ml à une concentration de 10 g/l dans le cyclohexane, soit une masse de 0,02 g).

On extrait ensuite le polyisoprène de la solution polymérique ainsi obtenue par stripping à la vapeur d'eau pendant 30 min., en présence de tamolate de calcium (on utilise 2 ml de tamol et 50 ml de $CaCl_2$ à 30 g/1). On sèche ensuite pendant environ 18 heures cette solution extraite dans une étuve à 60° C sous vide (à une pression de 200 mm Hg), avec un léger courant d'azote.

La mesure du taux de conversion de l'isoprène en polyisoprène en fonction du temps de réaction est utilisée pour décrire la cinétique de polymérisation.

La viscosité inhérente $\eta_{inh}$ à 0,1 g/dl dans le toluène caractérise quant à elle la macrostructure de chaque polyisoprène obtenu.

**2) Détails des polymérisations effectuées au moyen de chaque système catalytique « témoin » t, t' et selon l'invention 1 à 16 :**

Les tableaux ci-après détaillent :

- les caractéristiques de chaque système catalytique utilisé, en termes de :

  • conditions de solvatation (solvant(s) utilisé(s), durée et température de mise en contact), avec CH = cyclohexane et MCH = méthylcyclohexane,
  • rapport molaire « monomère de préformation (ici le butadiène, Bd en abrégé) /sel de terre rare (Nd en abrégé) »,
  • rapport molaire « agent d'alkylation (A1) / sel de terre rare (Nd) »,
  • conditions d'alkylation (durée et température T),
  • rapport molaire « donneur d'halogène (Cl) / sel de terre rare (Nd) »,
  • conditions de préformation ou vieillissement (durée et température T) ;

- les caractéristiques de chaque réaction de polymérisation réalisée, en termes de :

  • quantité de base catalytique en néodyme utilisée (Nd en $\mu$Mem),
  • rapport massique S/M (solvant cyclohexane / monomère à polymériser) et température T de polymérisation,
  • taux de conversion (taux conv. en abrégé) correspondant à des temps de réaction déterminés ; et

- les caractéristiques de plusieurs polyisoprènes obtenu, en termes de :

  • viscosité inhérente $\eta_{inh}$ et viscosité Mooney ML (1+4) à 100° C (mesurée selon la norme ASTM: D-1646),
  • masse moléculaire moyenne en nombre Mn et indice de polydispersité Ip, mesurés par chromatographie d'exclusion par la taille (SEC), voir annexe 2,
  • taux d'enchaînements cis-1,4, mesurés par la technique de résonance magnétique nucléaire du carbone 13 (RMN[13]C) et par la technique de dosage par moyen infrarouge (MIR), techniques respectivement identifiées par les signes « * » et « ** » dans les tableaux ci-après.

On se reportera à l'annexe 1 jointe pour la description détaillée de ces techniques.

| N° | Système catalytique | | | | | | Polymérisation | | | | Polyisoprène obtenu | | | |
|---|---|---|---|---|---|---|---|---|---|---|---|---|---|---|
| | Solvatat° (solvant durée /T) | Bd/ Nd mol | Al/ Nd mol | Alkylat° durée/T | Cl/ Nd mol | Préformation durée/T | Nd µMcm | S/ M T | Temps réaction (min.) | Taux Conv (%) | η_inh dl/g | ML (1+4) à 100° C | Mn (g/mol) Ip (SEC) | Cis 1,4 (%) |
| t | MCH 30 min. 30°C | 30 | 1,8 | 15 min. 30°C | 2,6 | 2 heures 60° C | 300 | 9 50° C | 20<br>40<br>60<br>120 | 0<br>0<br>0<br>0 | | | | |
| t' | MCH 30 min. 30°C | 30 | 1,8 | 15 min. 30°C | 2,6 | 2 heures 60° C | 300 | 9 50°C | 20<br>40<br>60<br>120 | 0<br>0<br>0<br>0 | | | | |
| 1 | MCH 30 min. 30° C | 50 | 2,0 | 15 min. 30°C | 3,0 | 2 heures 60° C | 260 | 9 50° C | 20<br>40<br>60<br>120 | 57<br>86<br>98<br>100 | 3,98<br>4,04 | | | 98,0** |
| 2 | n-heptane 30 min. 30° C | 50 | 2,0 | 15 min. 30°C | 3,0 | 2 heures 60° C | 260 | 9 50° C | 20<br>40<br>60<br>120 | 59<br>89<br>100<br>100 | 3,87<br>3,89 | | | 98,0** |
| 3 | MCH 30 min. 30° C | 50 | 1,8 | 15 min. 30°C | 2,6 | 2 heures 60° C | 250 | 9 50° C | 20<br>40<br>60<br>120 | 60<br>87<br>99<br>100 | 4,14<br>4,28 | | | 98,1*<br>98,0** |
| 4 | MCH 30 min. 30° C | 50 | 1,8 | 15 min. 30°C | 2,6 | 2 heures 60° C | 300 | 9 50° C | 20<br>40.<br>60<br>120 | 66<br>92<br>99<br>100 | 4,36<br>4,36<br>4,48 | | 425000/2,17 | 98,0** |
| 5 (1) | MCH 30 min. 30° C | 25 | 1,8 | 15 min, 30° C | 2,6 | 2 heures' 60° C | 300 | 9 50° C | 20<br>40<br>60 | 67<br>90<br>100 | 4,14 | | | |

(suite)

| N° | Système catalytique | | | | | | Polymérisation | | | | Polyisoprène obtenu | | | |
|---|---|---|---|---|---|---|---|---|---|---|---|---|---|---|
| | Solvatat° (solvant durée /T) | Bd/Nd mol | Al/Nd mol | Alkylat° durée/T | Cl/Nd mol | Préformation durée/T | Nd µMcm | S/M T | Temps réaction (min.) | Taux Conv (%) | $\eta_{inh}$ dl/g | ML (1+4) à 100°C | Mn (g/mol) Ip (SEC) | Cis 1,4 (%) |
| | | | | | | | | | 120 | 100 | 4,29 | | 443000/2,25 | 98,1** |
| 5 (2) | MCH 30 min. 30°C | 25 | 1,8 | 15 min. 30°C | 2,6 | 2 heures 60°C | 240 | 9 50°C | 120 | 100 | 4,40 | 83 | 490000/2,10 | 98,0** |
| | | | | | | | 255 | | | | 4,50 | 81 | | 97,9** |
| | | | | | | | 260 | | | | 4,30 | 80 | | 98,0** |
| | | | | | | | 285 | | | | 4,15 | 76 | | 98,0** |
| | | | | | | | 315 | | | | 4,10 | 71 | | 98,0** |
| | | | | | | | 345 | | | | 3,80, | 66 | | 98,0** |
| 5 (3) | MCH 30 min. 30°C | 25 | 1,8 | 15 min. 30°C | 2,6 | 2 heures 60°C | 375 | 9 30°C | 120 | 100 | 5,00 | 89 | 45000/2,28 | 98,4** |
| | | | | | | | 450 | | | | 4,60 | 81 | | 98,5** |
| | | | | | | | 460 | | | | 4,60 | 80 | | 98,4** |
| | | | | | | | 495 | | | | 4,40 | 76 | | 98,4** |
| | | | | | | | 540 | | | | 4,20 | 72 | | 98,4** |
| | | | | | | | 600 | | | | 4,10 | 65 | | 98,4** |
| 6 | MCH 30 min. 30°C | 30 | 1,8 | 15 min. 30°C | 2,6 | 2 heures 60°C | 300 | 9 50°C | 20 | 68 | | | | |
| | | | | | | | | | 40 | 96 | | | | |
| | | | | | | | | | 60 | 100 | 4,49 | | | |
| | | | | | | | | | 120 | 100 | 4,46 | | | 98,0** |
| 7 | n-heptane 30 min. 30°C | 30 | 1,8 | 15 min. 30°C | 2,6 | 2 heures 60°C | 300 | 9 50°C | 20 | 65 | | | | |
| | | | | | | | | | 40 | 95 | | | | |
| | | | | | | | | | 60 | 100 | 4,84 | | | |
| | | | | | | | | | 120 | 100 | 4,83 | | | 98,1** |
| 8 | MCH 30 min. 30°C | 50 | 2,0 | 15 min. 30°C | 3,0 | 2 heures 60°C | 245 | 9 50°C | 20 | 62 | | | | |
| | | | | | | | | | 40 | 86 | | | | |
| | | | | | | | | | 60 | 99 | 3,88 | | | |
| | | | | | | | | | 120 | 100 | 3,90 | | | 98,0** |
| 9 | MCH 30 min. 30°C | 50 | 1,8 | 15 min. 30°C | 3,0 | 2 heures 60°C | 200 | 9 50°C | 20 | 52 | | | | |
| | | | | | | | | | 40 | 81 | | | | |

(suite)

| | Système catalytique | | | | | | Polymérisation | | | | Polyisoprène obtenu | | | |
|---|---|---|---|---|---|---|---|---|---|---|---|---|---|---|
| N° | Solvatat° (solvant durée /T) | Bd/Nd mol | A1/Nd mol | Alkylat° durée/T | Cl/Nd mol | Préformation durée/T | Nd μMcm | S/MT | Temps réaction (min.) | Taux Conv (%) | η$_{inh}$ dl/g | ML (1+4)à 100°C | Mn (g/mol) Ip (SEC) | Cis 1,4 (%) |
| | 30° C | | | | | | | | 60 | 92 | 3,99 | | | |
| | | | | | | | | | 120 | 100 | 4,31 | | | 98,0** |
| 10 | MCH 30 min. 30° C | 30 | 1,8 | 30 min. 30° C | 2,6 | 2 heures 60° C | 380 | 9 50° C | 20 | 75 | | | | |
| | | | | | | | | | 40 | 100 | | | | |
| | | | | | | | | | 60 | 100 | 4,30 | | | |
| | | | | | | | | | 120 | 100 | 4,27 | | | 98,0** |
| 11 | MCH 30 min. 30° C | 30 | 1,8 | 30 min. 30° C | 2,6 | 1 heure 60° C | 270 | 9 50° C | 20 | 70 | | | | |
| | | | | | | | | | 40 | 100 | | | | |
| | | | | | | | | | 60 | 100 | 4,31 | | | |
| | | | | | | | | | 120 | 100 | 4,25 | | | 98,1** |
| 12 | MCH 30 min. 30° C | 30 | 1,5 | 30 min. 30° C | 2,6 | 2 heures 60° C | 540 | 9 50° C | 20 | 87 | | | | |
| | | | | | | | | | 40 | 100 | | | | |
| | | | | | | | | | 60 | 100 | 4,35 | | | |
| | | | | | | | | | 120 | 100 | 4,30 | | | 98,1** |
| 13 | MCH 30 min. 30° C | 30 | 1,3 | 30 min. 30° C | 2,6 | 2 heures 60° C | 760 | 9 50° C | 20 | 96 | | | | |
| | | | | | | | | | 40 | 100 | | | | |
| | | | | | | | | | 60 | 100 | 4,33 | | | |
| | | | | | | | | | 120 | 100 | 4,39 | 80 | | 98,1** |
| 14 | Huile, CH 4 heures 60° C | 50 | 4,5 | 15 min. 30° C | 3,0 | 2 heures 60° C | 90 | 9 50° C | 50 | 55 | | | | |
| | | | | | | | | | 100 | 81 | | | | |
| | | | | | | | | | 150 | 95,5 | 3,87 | | | 98,0** |
| 15 | Huile, CH 4 heures 60° C | 50 | 3,4 | 15 min. 30° C | 3,0 | 2 heures 60° C | 110 | 9 50° C | 50 | 71 | | | | |
| | | | | | | | | | 100 | 94 | | | | |
| | | | | | | | | | 150 | 100 | 3,89 | | | 98,0** |
| 16 | Huile, CH 4 heures 60° C | 50 | 2,2 | 15 min. 30° C | 3,0 | 2 heures 60° C | 160 | 9 50° C | 50 | 85 | | | | |
| | | | | | | | | | 100 | 100 | 3,88 | | | |
| | | | | | | | | | 150 | 100 | | | | 98,0** |

12

A titre indicatif, pour un taux d'enchaînements cis-1,4 de 98,1 % dans le polyisoprène qui a été déterminé par la technique de RMN$^{13}$C (repéré par le signe « * » ci-dessus), on a mesuré par cette même technique des taux d'enchaînements trans-1,4 et 3,4 respectivement égaux à 0,2 % et 1,7 % (le taux d'enchaînements 1,2 étant nul).

**3) Conclusions :**

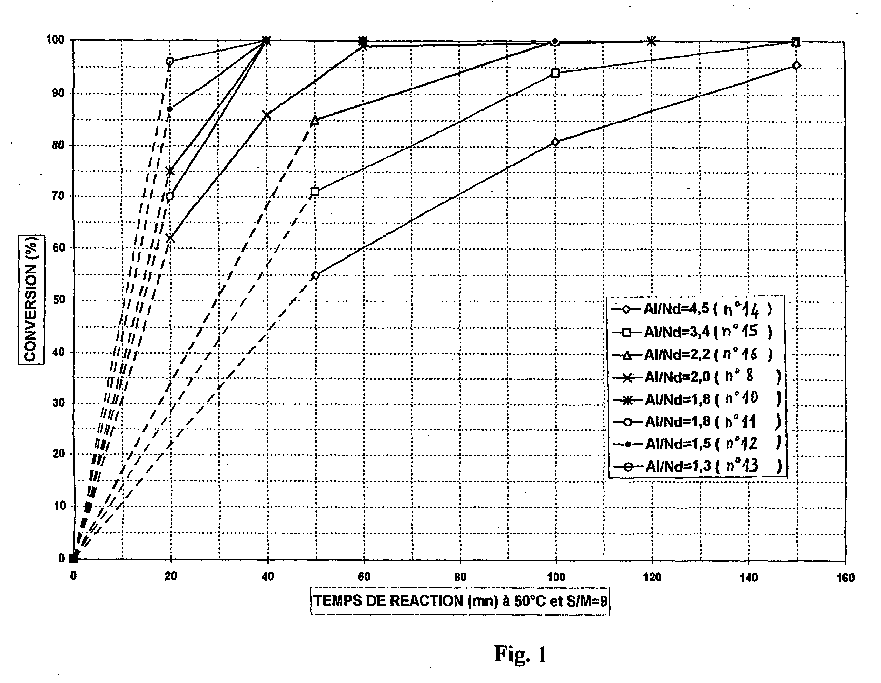

- Les exemples de polymérisation au moyen des systèmes catalytiques « témoin » t et t' montrent que l'utilisation, dans un système catalytique caractérisé par un rapport molaire Al/ Nd compris entre 1 et 2, d'un sel constitué d'octoate de néodyme ou d'acétylacétonate de néodyme à la place d'un sel de terre rare selon l'invention, tel que le tris[bis(2-éthylhexyl)phosphate] de néodyme, procure au système catalytique correspondant une activité nulle pour la polymérisation de l'isoprène.
- Les exemples de polymérisation au moyen des systèmes catalytiques selon l'invention montrent que les activités catalytiques obtenues avec des rapports molaires Al/ Nd qui sont compris entre 1 et 2 (voir en particulier les systèmes catalytiques 3 à 7 et 9 à 13) sont particulièrement élevées. On obtient en effet pour tous ces systèmes catalytiques 100 % de conversion de l'isoprène au bout de 60 minutes environ, pour une viscosité inhérente finale qui est comprise en moyenne entre 4 et 4,5 dl/g.
  Pour une viscosité inhérente donnée de l'ordre de 4 dl/g pour les polyisoprènes obtenus (à 100 % de conversion), on notera que l'activité catalytique augmente lorsque le rapport molaire Al/ Nd diminue, comme le montre la Fig. 1 qui concerne la préparation de polyisoprènes au moyen desdits systèmes catalytiques 8 et 10 à 16.
  On notera en particulier que le système catalytique 13, caractérisé par un rapport Al/ Nd égal à 1,3, constitue un mode préférentiel de réalisation de l'invention, dans la mesure où il permet d'obtenir un taux de conversion de 96 % en 20 min. et une viscosité inhérente finale d'environ 4,4 dl/g pour un polyisoprène présentant un taux d'enchaînements cis-1,4 de 98 %.
- On notera que la reproductibilité de l'activité des systèmes catalytiques selon l'invention est excellente, cela en dépit des différences pouvant exister au sujet de la qualité de l'isoprène et du solvant utilisés, notamment.
  On notera également que les polyisoprènes obtenus présentent sensiblement les mêmes caractéristiques macrostructurales et microstructurales (taux de cis 1-4 de 98 % environ, en particulier), en dépit de variations de la quantité de base catalytique (Nd) et du rapport molaire Butadiène/ Nd.
  En particulier, les essais réalisés avec les systèmes catalytiques 3 à 6 montrent que les valeurs de ce dernier rapport (allant de 25 à 50) n'ont pas d'influence significative sur l'activité et les caractéristiques précitées.
- On notera que les polyisoprènes obtenus au moyen des systèmes catalytiques selon l'invention présentent des indices de polymolécularité particulièrement réduits. A titre d'exemple, les polyisoprènes obtenus au moyen du système catalytique 5 suite auxdits essais (1), (2) et (3) présentent des indices de polymolécularité qui varient de 2,1 à 2,3.
- Les systèmes catalytiques 14 à 16, qui comprennent à titre de solvant un mélange d'une huile et de cyclohexane, présentent des activités relativement proches de celles des systèmes catalytiques 1 à 13, qui comprennent un unique solvant alicyclique, tel que le méthylcyclohexane (indépendamment de la quantité de base catalytique en Nd).
- Comme cela est visible pour les polymérisations réalisées au moyen des systèmes catalytiques 10 à 13, caractérisées par un rapport Al/ Nd inférieur à 2, on notera que l'obtention d'une activité catalytique optimale implique de faire réagir plus longtemps le sel de terre rare avec l'agent d'alkylation (30 min. au lieu de 15 min. à 30° C) et de réduire le rapport Cl/ Nd (d'une valeur égale à 3, pour des systèmes catalytiques caractérisés par des rapports Al/ Nd égaux ou supérieurs à 2, à une valeur égale à 2,6).
- Au vu des résultats procurés par les systèmes catalytiques 10 et 11, on notera que les conditions de préformation (température et durée) n'ont pas d'effet sur l'activité catalytique, pour un rapport Al/Nd donné (égal à 1,8), les cinétiques de polymérisation étant sensiblement les mêmes à viscosité identique (la quantité de Nd devant être adaptée).
- D'une manière générale, on notera que le taux d'enchaînements cis-1,4 dépend de la température de polymérisation (voir le troisième exemple de polymérisation au moyen du système catalytique 5, caractérisé par une température de polymérisation de 30° C, qui procure pour le polyisoprène obtenu des taux d'enchaînements cis-1,4 de 98,4 ou 98,5 %, supérieurs à ceux obtenus à une température de polymérisation de 50° C avec ce système catalytique 5).

**III. Polymérisation du butadiène au moyen des systèmes catalytiques 14 à 29 :**

**1) Mode opératoire suivi pour les diverses polymérisations:**

On a utilisé, à titre de réacteur de polymérisation, une bouteille "Steinie" de 250 ml. On a mis en oeuvre chaque réaction de polymérisation en soumettant cette bouteille à une agitation dans un bac à eau.

Chaque réaction de polymérisation du butadiène (on utilise 10 g de butadiène par bouteille) est effectuée dans le cyclohexane à 30˚ C, à 50˚ C ou à 60 ˚ C, et sous atmosphère inerte (azote). On a utilisé un rapport massique « solvant de polymérisation (cyclohexane) /monomère (butadiène) » égal à 7 ou 9 (ce rapport massique est appelé S/M ci-après).

La quantité de base catalytique en néodyme varie de 250 $\mu$mol à 2000 $\mu$mol pour 100 g de butadiène, suivant l'essai réalisé (cette quantité est exprimée en $\mu$Mcm dans les tableaux récapitulatifs ci-après). On notera que cette quantité de néodyme est ajustée suivant la valeur du rapport (agent d'alkylation / sel de terre rare), en vue de l'obtention de viscosités inhérentes finales qui sont sensiblement identiques pour les polybutadiènes obtenus.

L'étanchéité de la bouteille est assurée par un ensemble de type "joint-capsule percée" permettant ainsi l'ajout de chaque système catalytique à l'aide d'une seringue.

L'acétylacétone est utilisée selon un volume de 1 ml pour stopper les réactions de polymérisation correspondant aux systèmes catalytiques 14 à 20, et selon un rapport molaire acétylacétone/ néodyme égal à 21 pour stopper les réactions correspondant aux systèmes catalytiques 28 et 29.

Le méthanol est quant à lui utilisé pour stopper les réactions de polymérisation correspondant aux systèmes catalytiques 21 à 27.

La N-1,3-diméthylbutyl-N'-phényl-p-phénylènediamine (6PPD) est utilisée comme agent de protection (selon une masse de 0,5 g) et, dans le cas de la solution polymérique obtenue avec le système catalytique 28, la 6PPD est utilisée selon une quantité de 0,2 pce en association avec 0,2 pce d'un agent de protection de dénomination « AO2246 ».

On extrait ensuite les polybutadiènes des solutions polymériques ainsi obtenues par stripping à la vapeur d'eau en présence de tamolate de calcium, à l'instar des polyisoprènes préparés au paragraphe II.

Le séchage est réalisé pendant environ 18 heures dans une étuve à 60˚ C sous vide (à une pression de 200 mm Hg), avec un léger courant d'azote.

La mesure du taux de conversion du butadiène en polybutadiène en fonction du temps de réaction est utilisée pour décrire la cinétique de polymérisation.

La viscosité inhérente $\eta_{inh}$ à 0,1 g/dl dans le toluène caractérise quant à elle la macrostructure de chaque polybutadiène obtenu.

**2) Détails des polymérisations effectuées au moyen de chaque système catalytique selon l'invention 14 à 29 :**

A l'instar des tableaux du paragraphe II/, les tableaux ci-après détaillent les caractéristiques de chaque système catalytique utilisé, de chaque réaction de polymérisation réalisée et des polybutadiènes obtenus, en termes de :

| N° | Solvatat° (solvant/ durée/T) | Bd/Nd mol | Al/Nd mol | Alkylat° durée/T | Cl/Nd mol | Préformation durée/T | Nd μMcm | S/MT | Temps réaction (min.) | Taux Conv (%) | η_inh dl/g | Mn(g/mol) Ip(SEC) | Cis 1,4 (%) |
|---|---|---|---|---|---|---|---|---|---|---|---|---|---|
| | | | | | | | | | **Système catalytique** | | | **Polymérisation** ... **Polybutadiènes** | |
| 14 | Huile, CH 4 heures 60° C | 50 | 4,5 | 15 min. 3 30° C | | 2 heures 60° C | 250 | 7 30° C | 15 25 35 47 | 38 71 86 100 | - - 2,57 2,71(*) 2,77(**) | 185000 1,42 | 98,9 |
| 15 | Huile, CH 4 heures 60° C | 50 | 3,4 | 15 min. 30° C | 3 | 2 heures 60° C | 350 | 7 30° C | 7 15 22 32 | 25 67,5 93 100 | - - 2,54 2,68(*) 2,80(**) | 185000 1,44 | 98,1 |
| 16 | Huile, CH 4 heures 60° C | 50 | 2,2 | 15 min. 30° C | 3 | 2 heures 60° C | 560 | 7 30° C | 5 9 13 17 | 34,5 71 94 100 | - - 2,52 2,57(*) 2,68(**) | 178000 1,47 | 97,7 |
| | Huile, CH | 50 | 4 | 15 min. | 3 | 2 heures | 250 | 9 | 8 | 73 | 2,36 | 194000 | |
| 17 | 4 heures 60° C Huile, CH | 50 | 4 | 30° C 15 min. | 3 | 60° C 2 heures | 250 | 50° C 9 | 11 14 8 | 94 100 73 | 2,72 2,87 2,34 | 1,76 185000 | 96,2 |
| 18 | 4 heures 60° C Huile, CH | 50 | 4 | 30° C 15 min. | 3 | 60° C 2 heures | 250 | 50° C 9 | 11 14 8 | 96,5 100 78 | 2,68 2,81 2,41 | 1,63 185000 | 95,7 |
| 19 | 4 heures 60° C | | | 30° C | | 60° C | | 50° C | 11 14 | 95 100 | 2,75 2,84 | 1,65 | 96,4 |
| 20 | Huile, CH 4 heures 60° C | 50 | 4 | 15 min. 30° C | 3 | 2 heures 60° C | 250 | 9 50° C | 8 11 14 | 76,5 97 100 | 2,50 2,73 2,82 | 189000 1,63 | 95,7 |

(suite)

| N° | Solvatat° (solvant/ durée/T) | Bd/Nd mol | Al/Nd mol | Alkylat° durée/T | Cl/Nd mol | Préformation durée/T | Nd $\mu$Mcm | S/ MT | Temps réaction (min.) | Taux Conv (%) | $\eta_{inh}$ dl/g | Mn(g/mol) Ip(SEC) | Cis 1,4 (%) |
|---|---|---|---|---|---|---|---|---|---|---|---|---|---|
| | | | | | | | **Système catalytique** spanning | | | **Polymérisation** | | **Polybutadiènes** | |
| 21 | Huile, CH 4 heures 60° C | 50 | 4 | 15 min. 30° C | 3 | 2 heures 60° C | 300 | 9 30° C | 11 20 30 45 | 28 61 87 100 | - - 2,77 2,95 | | |
| 22 | Huile, MCH 4 heures 60° C | 50 | 4 | 15 min. 3 30° C | | 2 heures 60° C | 300 | 9 30° C | 11 20 30 45 | 29 63 86 98 | - - 2,83 3,05 | | |
| 23 | Huile, CH 4 heures 60° C | 50 | 4 | 15 min. 30° C | 3 | 2 heures 60° C | 300 | 9 30° C | 11 20 30 45 | 30 65 89 100 | - - 2,82 2,99 | | |
| 24 | Huile, CH 4 heures 60° C | 50 | 3,9 | 15 min. 30° C | 3 | 2 heures' 60° C | 300 | 7 30° C | 10. 20 30 40 | 29 70 89 99 | - - 2,62 2,74(*) 2,79(**) | 195000 1,43 | 98,7 |
| 25 | Huile, CH 4 heures 60° C | 50 | 2,8 | 15 min. 30° C | 3 | 2 heures 60° C | 420' | 7 30° C | 5 10 15 20 | 22 53 89,5 98 | - - 2,53 2,65(*) 2,73(**) | 181000 1,45 | 98,2 |
| 26 | Huile, CH 4 heures 60° C | 50 | 1,7 | 15 min. 30° C | 3 | 2 heures 60° C | 680 | 7 30° C | 5 9 13 16,5 | 40,5 80 97 100 | - - 2,75 2,80(*) 2,98(**) | 189000 1,60 | 98,5 |

(suite)

| N˚ | Solvatat˚ (solvant/ durée/T) | Bd/Nd mol | Al/Nd mol | Alkylat˚ durée/T | Cl/Nd mol | Préformation durée/T | Nd μMcm | S/ MT | Temps réaction (min.) | Taux Conv (%) | $\eta_{inh}$ dl/g | Mn(g/mol) Ip(SEC) | Cis 1,4 (%) |
|---|---|---|---|---|---|---|---|---|---|---|---|---|---|
| | **Système catalytique** | | | | | | **Polymérisation** | | | | **Polybutadiènes** | | |
| **27** | CH 4 heures 60˚ C | 50 | 4 | 15 min. 30˚ C | 3 | 2 heures 60˚ C | 300 | 9 30˚ C | 11 20 30 45 | 38 72 92 98 | 2,86 3,12 | | |
| **28** | CH 2 heures 60˚ C | 50 | 4 | 15 min. 30˚ C | 3 | 2 heures 60˚ C | 520 520 460 | 7 60˚ C 7 60˚ C 7 60˚ C | 15 15 15 | 100 100 100 | 2,50 2,61 2,58 | | |
| **29** | MCH 30 min. 30˚ C | 30 | 1,8 | '30 min. 30˚ c | 2,6 | 2 heures 60˚ C | 2000 | 9 30˚ c | 15 | 100 | 2,99 | | |

Les valeurs de viscosités inhérentes repérées par le symbole (*) sont des viscosités « brutes », c'est-à-dire qu'elles correspondent à la viscosité de l'échantillon avec son huile résiduelle issue du système catalytique.

Les valeurs de viscosités inhérentes repérées par le symbole (**) sont des viscosités « sans huile », c'est-à-dire qu'elles correspondent à la viscosité de l'échantillon précédent qui a été lavé de son huile par coagulation dans le méthanol

Les taux d'enchaînements cis-1,4 présentés dans les deux tableaux ci-dessus ont été mesurés par la technique « proche infrarouge » (également appelée en abrégé « NIR » par l'homme du métier, voir annexe 1).

Concernant les essais réalisés au moyen des systèmes catalytiques 28 et 29, on a en outre mesuré les viscosités Mooney ML(1+4) des polybutadiènes obtenus ainsi que leur indice de polydispersité Ip (mesuré par la technique SEC). Les résultats sont les suivants :

| N° | Solvatat° (solvant / durée /T | Bd/ Nd mol | Al/ Nd mol | Alkylat° durée/T | Cl/ Nd mol | Préformation durée/T | Nd µMcm | S/ M T | Temps réaction (min.) | Taux Conv (%) | $\eta_{inh}$ dl/g | ML(1+4) | Ip (SEC) |
|---|---|---|---|---|---|---|---|---|---|---|---|---|---|
| **28** | CH 2 heures 60° C | 50 | 4 | 15 min. 30° C | 3 | 2 heures 60° C | 520 | 7 60° C | 15 | 100 | 2,50 | 43 | 1,85 |
| | | | | | | | 520 | 7 60° C | 15 | 100 | 2,61 | 50 | 1,92 |
| | | | | | | | 460 | 7 60° C | 15 | 100 | 2,58 | 45 | 1,79 |
| **29** | MCH 30 min. 30° C | 30 | 1,8 | 30 min. 30° c | 2,6 | 2 heures 60° C | 2000 | 9 30° c | 15 | 100 | 2,99 | 59 | 1,86 |
| | | | | | | | | | | | | | 1,92 |
| | | | | | | | | | | | | | 1,90 |

EP 1 355 960 B1

Les résultats de ces essais montrent que les systèmes catalytiques selon l'invention permettent d'obtenir des polybutadiènes présentant à la fois une viscosité Mooney ML(1+4) supérieure à 40 et un indice de polydispersité inférieur à 2, ce qui les rend particulièrement bien adaptés pour les bandes de roulement d'enveloppe de pneumatique.

**3) Conclusions :**

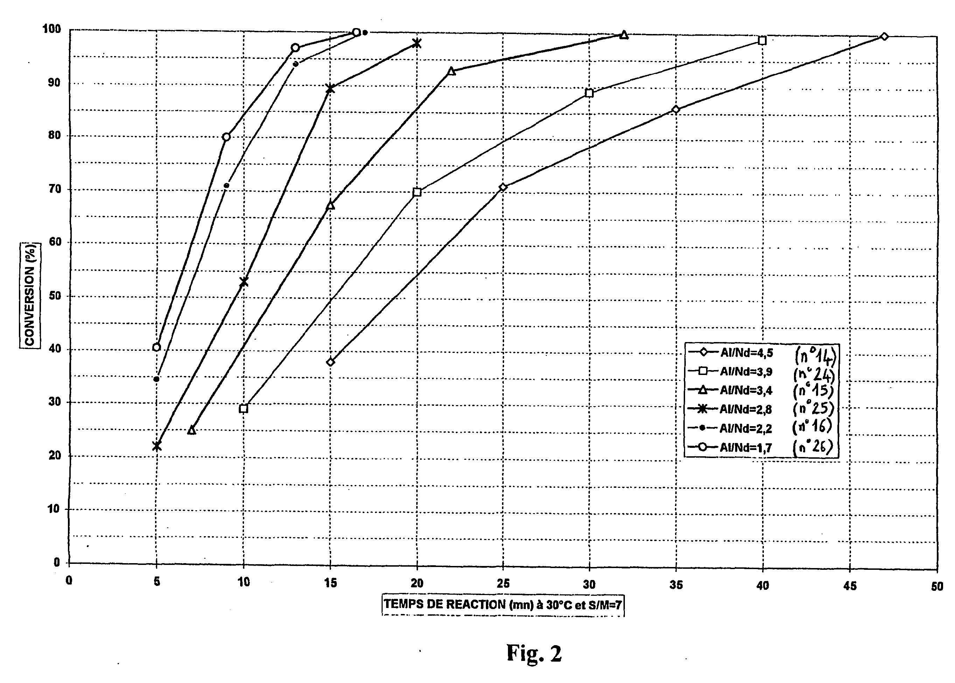

- Pour une viscosité inhérente donnée comprise entre 2,6 et 2,8 dl/g pour les polybutadiènes obtenus (à sensiblement 100 % de conversion), on notera que l'activité catalytique augmente lorsque le rapport molaire Al/ Nd diminue, comme le montre la Fig. 2 qui concerne la préparation de polybutadiènes au moyen desdits systèmes catalytiques 14, 15, 16, 24, 25, 26.
  On peut voir à la Fig. 2 que la réduction du rapport Al/Nd de 4,5 à 1,7 permet d'augmenter très sensiblement l'activité catalytique (essais réalisés au moyen dés systèmes catalytiques 14 et 26, respectivement, où l'on est passé de 250 à 680 $\mu$mol de Nd pour 100 g de butadiène, pour obtenir une viscosité analogue comprise entre 2,6 et 2,8 dl/g). On notera que le système catalytique 26, caractérisé par un rapport Al/ Nd égal à 1,7, constitue un mode préférentiel de réalisation de l'invention, dans la mesure où il permet d'obtenir un taux de conversion de 100 % en 16,5 min. pour un polybutadiène présentant une viscosité inhérente d'environ 2,8 dl/g et un taux d'enchaînements cis-1,4 de 98,5 %.
- On notera que la reproductibilité de l'activité de ces systèmes catalytiques pour polymériser le butadiène est très satisfaisante (voir notamment les essais réalisés avec les systèmes catalytiques 17 à 20, les polybutadiènes obtenus présentant sensiblement les mêmes caractéristiques de macrostructure et de microstructure).
- On notera également que les polybutadiènes obtenus au moyen de ces systèmes catalytiques présentent des indices de polymolécularité particulièrement réduits (Ip sensiblement compris entre 1,40 et 1,80).
- Les essais réalisés au moyen des systèmes catalytiques 21, 22, 23 et 27, qui comprennent à titre de solvant aliphatique ou alicyclique un mélange d'une huile de haut poids moléculaire et d'un solvant de bas poids moléculaire, tel que le cyclohexane ou le méthylcyclohexane, ou bien seulement du cyclohexane, montrent que la nature du solvant aliphatique ou alicyclique qui est associé à l'huile pour la formation d'un gel avec le sel de terre rare n'a pratiquement pas d'incidence sur l'activité du système catalytique. De plus, la présence ou l'absence de ladite huile dans ce solvant ne modifie pratiquement pas l'activité catalytique (voir l'essai réalisé avec le système catalytique 27).

**ANNEXE 1 : Détermination de la microstructure des élastomères obtenus.**

**I/ Pour les polyisoprènes :**

**1) Par la technique de résonance magnétique nucléaire du carbone 13 (analyse RMN[13]C) :**

a) Préparation des échantillons:

2 g de polyisoprène sont extraits à l'acétone au reflux pendant 8 heures. Le polyisoprène extrait est ensuite séché à température ambiante et sous vide pendant 24 heures. Puis ce polyisoprène séché est remis en solution dans du chloroforme. La solution de polyisoprène est filtrée et le solvant est éliminé à l'évaporateur rotatif pendant 4 heures (la température du bain est de 40° C)..

Pour l'analyse, on solubilise environ 600 mg du polyisoprène ainsi préparé dans du $CDCl_3$ (2 ml), directement dans un tube RMN[13]C.

b) Caractéristiques de l'appareillage:

- Spectrophotomètre commercialisé sous la dénomination « BRUKER AM250 ».
- Fréquence de résonance (SFO) = 62,9 MHz.
- Programme d'impulsion : INVGATE.AU (suppression de l'effet « NOE » pour l'analyse quantitative en RMN du $^{13}$C).
- Durée d'impulsion : 9$\mu$s (90˚).
- Durée de relaxation : 10 s.
- Nombre de transitoires accumulés (NS) = 8192.

c) Attribution des pics du spectre:

L'identification des pics a été faite d'après :

Quang Tho Pham, R. Petiaud, H. Waton, M.F. Llauro Darricades, "Proton and NMR Spectra of Polymers", 1991, Penton Press.

d) Méthode d'intégration:

- Pas de motifs 1-2 détectés.
- Le rapport entre les taux de 3-4 et de 1-4 est déterminé à l'aide des carbones éthyléniques. La teneur en enchaînements 1-4 trans et 1-4 cis dans le polyisoprène est calculée avec les carbones aliphatiques.

2) **Par la technique de dosage par moyen infrarouge (MIR):**

a) Préparation des échantillons:

Pour ce dosage infrarouge, on utilise le polyisoprène tel que préparé au paragraphe 1) ci-dessus, pour la RMN (l'échantillon est extrait à l'acétone puis est séché en étuve).

Une solution du polyisoprène à 10 g/l exactement dans le $CCl_4$ est analysée à l'aide d'une cellule de KBr de 0,2 mm d'épaisseur.

b) Appareillage:

- Spectrophotomètre commercialisé sous la dénomination « BRUKER IFS88 ».
- Conditions d'enregistrement:

  ouverture du faisceau : maximale ;
  résolution : 2 $cm^{-1}$ ;
  vitesse du miroir mobile : 0,639 $cm.s^{-1}$ ;
  détecteur : DTGS ;
  accumulations : 64 scan ;
  temps de purge : 3 mn ;
  fenêtre spectrale: 4000 à 400 $cm^{-1}$ ;
  spectres enregistrés en transmittance ;
  référence : solvant $CCl_4$.

- Traitement des spectres :

  transfert sur micro-ordinateur ;
  traitement avec le logiciel « OPUS » de « BRUKER ».

c) Attribution des pics du spectre:

Des études spectrales et le contenu des documents suivants ont permis de déterminer les bandes caractéristiques des différents modes d'enchaînement :

- Y. Tanaka, Y. Takeuchi, M. Kobayashi, H. Tadokoro, Journal of Polymer Science, Part A-2, 1971, 9(1), 43-57.
- J.P. Kistel, G. Friedman, B. Kaempf, Bulletin de la Société Chimique de France, 1967, n˚12.
- F. Asssioma, J. Marchal, C. R. Acad. Sc. Paris, Ser C, 1968, 266(22), 1563-6 et Ser D, 1968, 266(6), 369-72.
- T.F. Banigan, A.J. Verbiscar, T.A. Oda, Rubber Chemistry and technology, 1982, 55(2), 407-15.

La conformation 3-4 présente deux bandes caractéristiques :

- une bande à 880 cm$^{-1}$ de forte intensité correspondant aux vibrations de déformation hors du plan ($\delta$ C-H) des hydrogènes terminaux du groupement vinylique (=CH$_2$).
- une bande à 3070 cm$^{-1}$ correspondant aux élongations $\nu$ C-H de ce même groupement (=CH$_2$).

La conformation 1-4 cis possède une bande caractéristique vers 3030 cm$^{-1}$. Cette bande correspond aux vibrations d'élongation $\nu$ C-H du groupement =CH.

La bande correspondant aux vibrations de déformation symétrique des groupements méthyles ($\delta$ CH$_3$) est une bande complexe qui intègre les trois conformations. L'absorption correspondant aux $\delta$ CH$_3$ de la conformation 1-4 trans est maximale vers 1385 cm$^{-1}$; il s'agit d'un épaulement de cette bande.

d) Méthode d'intégration:

Les bandes du 3-4 et du 1-4 cis sont intégrées selon le mode de la surface tangentielle. Le maximum d'absorption du 1-4 trans se situe en épaulement de la bande intense des $\delta$ CH$_3$. La méthode la plus adaptée dans ce cas est la mesure de la hauteur de bande avec comme ligne de base la tangente de la bande des $\delta$ CH$_3$.

e) Courbes d'étalonnage:

Expression de la loi de Beer-Lambert:

$$\mathrm{Do}(\nu \text{ ou } \delta) = \varepsilon(\nu \text{ ou } \delta)\, e\, c$$

avec:

Do($\nu$ ou $\delta$) = densité optique de la bande $\nu$ ou $\delta$ ;
$\varepsilon$($\nu$ ou $\delta$) = coefficient d'extinction molaire de l'analyte responsable de la bande $\nu$ ou $\delta$ ;
c = concentration molaire de l'analyte ; et
e = épaisseur de l'échantillon.

Des polyisoprènes commerciaux (commercialisés sous les dénominations « IR305 », « NATSYN 2200 » et « SKI-3S »), un polyisoprène synthétisé au laboratoire (MC78) et du caoutchouc naturel (NR) sont pris comme étalons. Comparés à iso-concentration (solutions), la loi peut donc s'écrire :

$$\mathrm{Dx} = \mathrm{K}\, \mathrm{X}$$

avec :

Dx = valeur de l'intégration de la bande correspondant au motif X,
X = taux de motif X dans la gomme (déterminé par RMN$^{13}$C), et
K = constante d'étalonnage.

Les courbes d'étalonnage Dx = f(X) peuvent donc être tracées pour chacun des motifs.

**II/ Pour les polybutadiènes** :

On a utilisé la technique de dosage appelée « proche infrarouge » (NIR). Il s'agit d'une méthode indirecte faisant appel à des élastomères « témoin » dont la microstructure a été mesurée par la technique de RMN$^{13}$C. On utilise la relation quantitative (loi de Beer-Lambert) existant entre la répartition des monomères dans un élastomère et la forme du spectre NIR de celui-ci. Cette technique est mise en oeuvre en deux étapes :

1) Etalonnage :

- on procède à l'acquisition des spectres respectifs des élastomères « témoin ».
- On établit un modèle mathématique associant une microstructure à un spectre donné, ceci à l'aide de la méthode de régression PLS (Partial Least Squares) reposant sur une analyse factorielle des données spectrales. Les deux documents suivants traitent d'une manière approfondie de la théorie et de la mise en oeuvre de cette méthode d'analyse de données « multi-variées » :

  (1) P. GELADI et B. R. KOWALSKI« Partial Least Squares regression : a tutorial »,Analytica Chimica Acta, vol. 185, 1-17 (1986).
  (2) M. TENENHAUS« La régression PLS - Théorie et pratique »Paris, Editions Technip (1998).

2) Mesure :

- On procède à un enregistrement du spectre de l'échantillon.
- On réalise le calcul de la microstructure.

**ANNEXE 2 :**

**Détermination de la distribution des masses moléculaires des élastomères obtenus par la technique de chromatographie d'exclusion par la taille (SEC).**

a) Principe de la mesure:

La chromatographie d'exclusion par la taille ou SEC (size exclusion chromatography) permet de séparer physiquement les macromolécules suivant leur taille à l'état gonflé sur des colonnes remplies de phase stationnaire poreuse. Les macromolécules sont séparées par leur volume hydrodynamique, les plus volumineuses étant éluées en premier.
Sans être une méthode absolue, la SEC permet d'appréhender la distribution des masses moléculaires d'un polymère. A partir de produits étalons commerciaux, les différentes masses moyennes en nombre (Mn) et en poids (Mw) peuvent être déterminées et l'indice de polydispersité calculé (Ip = Mw/Mn).

b) Préparation du polymère:

Il n'y a pas de traitement particulier de l'échantillon de polymère avant analyse. Celui-ci est simplement solubilisé dans du tétrahydrofurane à une concentration d'environ 1 g/l.

c) Analyse SEC:

L'appareillage utilisé est un chromatographe « WATERS, modèle 150C ». Le solvant d'élution est le tétrahydrofurane, le débit de 0,7 ml/mn, la température du système de 35˚C et la durée d'analyse de 90 min. On utilise un jeu de quatre colonnes en série, de dénominations commerciales « SHODEX KS807 », « WATERS type STYRAGEL HMW7 » et deux « WATERS STYRAGEL HMW6E ».
Le volume injecté de la solution de l'échantillon de polymère est 100 $\mu$l. Le détecteur est un réfractomètre différentiel « WATERS modèle RI32X » et le logiciel d'exploitation des données chromatographiques est le système « WATERS MILLENIUM » (version 3.00).

**Revendications**

1. Système catalytique utilisable pour préparer par polymérisation des élastomères diénique, à base d'au moins:

   - un monomère diène conjugué,
   - un sel d'un ou plusieurs métaux de terre rare d'un acide phosphorique organique,
   - un agent d'alkylation constitué d'un alkylaluminium choisi parmi les trialkylaluminiums et les hydrures de dialkylaluminium, et
   - un donneur d'halogène constitué d'un halogénure d'alkylaluminium,

   **caractérisé en ce que** ledit sel est en suspension dans au moins un solvant hydrocarboné inerte et saturé de type aliphatique ou alicyclique, le rapport molaire (agent d'alkylation / sel de terre rare) présentant une valeur allant de 1 à 5.

2. Système catalytique selon la revendication 1, **caractérisé en ce que** ledit sel est un tris[bis(2-éthylhexyl)phosphate] de terre(s) rare(s).

3. Système catalytique selon la revendication 2, **caractérisé en ce que** ledit sel est le tris[bis(2-éthylhexyl)phosphate] de néodyme.

4. Système catalytique selon une des revendications précédentes, **caractérisé en ce qu'**il comprend ledit ou lesdits métaux de terre rare selon une concentration égale à 0,02 mol/1.

5. Système catalytique selon une des revendications précédentes, **caractérisé en ce que** ledit sel présente une teneur massique en métal ou métaux de terre rare allant de 12,0 à 13,5 %, déterminée à la fois par la technique de titrage complexométrique en retour par l'acide diéthylène diamine tétracétique qui consiste en un titrage en retour avec complexation du néodyme, par un excès d'acide diéthylène diamine tétracétique, dans lequel il est dosé en excès à pH = 4,6 par du sulfate de zinc et utilisation d'un indicateur coloré avec détection photométrique du point d'équivalence et par la technique de spectrométrie d'émission atomique couplée à un plasma induit qui consiste en l'observation des raies de longueur d'onde de 406,109 nm et 401,225 nm, émises par des atomes de néodyme parvenus dans un état excité au sein d'un plasma après un étalonnage préalable avec des sels « témoin » de néodyme présentant une teneur connue en néodyme.

6. Système catalytique selon une des revendications précédentes, **caractérisé en ce que** le rapport molaire (donneur d'halogène/ sel) présente une valeur allant de 2,2 à 3.

7. Système catalytique selon une des revendications précédentes, **caractérisé en ce que** le rapport molaire (monomère diène conjugué / sel) présente une valeur allant de 25 à 50.

8. Système catalytique selon une des revendications précédentes, **caractérisé en ce que** ledit rapport molaire (agent d'alkylation / sel de terre rare) présente une valeur allant de 1 à 2.

9. Système catalytique selon une des revendications précédentes, **caractérisé en ce que** ledit monomère diène conjugué est le butadiène.

10. Système catalytique selon une des revendications précédentes, **caractérisé en ce que** ledit agent d'alkylation est l'hydrure de diisobutylaluminium.

11. Système catalytique selon une des revendications précédentes, **caractérisé en ce que** ledit donneur d'halogène est le chlorure de diéthylaluminium.

12. Procédé de préparation d'un système catalytique selon une des revendications précédentes, **caractérisé en ce qu'**il consiste:

   - dans une première étape, à réaliser une suspension dudit sel dans ledit solvant,
   - dans une seconde étape, à ajouter à ladite suspension ledit monomère diène conjugué,
   - dans une troisième étape, à ajouter ledit agent d'alkylation à ladite suspension comprenant ledit monomère pour l'obtention d'un sel alkylé, et
   - dans une quatrième étape, à ajouter ledit donneur d'halogène audit sel alkylé.

13. Procédé de préparation d'élastomères diéniques consistant à faire réagir un système catalytique dans un solvant hydrocarboné inerte et en présence d'un diène conjugué à polymériser, **caractérisé en ce qu'**il consiste à utiliser un système catalytique selon une des revendications 1 à 11.

14. Procédé de préparation d'élastomères diéniques selon la revendication 13, **caractérisé en ce qu'**il consiste à homopolymériser de l'isoprène à une température allant de 25° C à 55° C pour l'obtention de polyisoprènes présentant des taux d'enchaînements cis-1,4, mesurés à la fois selon les techniques de résonance magnétique nucléaire du carbone 13 et de dosage par moyen infrarouge telles que décrites dans l'Annexe 1, qui appartiennent à un domaine allant de 98,0 % à 98,5 %.

**15.** Procédé de préparation d'élastomères diéniques selon la revendication 13, **caractérisé en ce qu'**il consiste à homopolymériser ou à copolymériser du butadiène à une température allant de 25˚ C à 100˚ C à l'aide d'un système catalytique à base d'au moins:

- un monomère diène conjugué,
- un sel d'un ou plusieurs métaux de terre rare d'un acide phosphorique organique,
- un agent d'alkylation constitué d'un alkylaluminium de formule $AlR_3$ ou $HAlR_2$, et
- un donneur d'halogène constitué d'un halogénure d'alkylaluminium,

ledit sel est en suspension dans au moins un solvant hydrocarboné inerte et saturé de type aliphatique ou alicyclique, le rapport molaire (agent d'alkylation / sel de terre rare) présentant une valeur allant de 1 à 5 et ledit sel présentant une teneur massique en métal ou métaux de terre rare allant de 12,0 à 13,5 %, ladite teneur étant déterminée à la fois par la technique de titrage complexométrique en retour par l'acide diéthylène diamine tétracétique qui consiste en un titrage en retour avec complexation du néodyme, par un excès d'acide diéthylène diamine tétracétique, dans lequel il est dosé en excès à pH = 4,6 par du sulfate de zinc et utilisation d'un indicateur coloré avec détection photométrique du point d'équivalence et par la technique de spectrométrie d'émission atomique couplée à un plasma induit, qui consiste en l'observation des raies de longueur d'onde de 406,109 nm et 401,225 nm, émises par des atomes de néodyme parvenus dans un état excité au sein d'un plasma après un étalonnage préalable avec des sels « témoin » de néodyme présentant une teneur connue en néodyme

pour l'obtention d'homopolymères du butadiène ou de copolymères du butadiène présentant à la fois une viscosité Mooney ML(1+4) à 100˚ C égale ou supérieure à 40, mesurée selon la norme ASTM D 1646, et un indice de polydispersité inférieur à 2,5, mesuré par la technique de chromatographie d'exclusion par la taille.

## Claims

**1.** A catalytic system usable for the preparation of diene elastomers by polymerisation, said system being based on at least:

- a conjugated diene monomer,
- an organic phosphoric acid salt of one or more rare earth metals,
- an alkylating agent consisting of an alkylaluminium chosen from trialkylaluminiums and dialkylaluminium hydrides, an
- a halogen donor consisting of an alkylaluminium halide,

**characterised in that** said salt is suspended in at least one inert and saturated aliphatic or alicyclic hydrocarbon solvent, the "alkylating agent:rare earth salt" molar ratio ranging from 1 to 5.

**2.** A catalytic system according to Claim 1, **characterised in that** said salt is a rare earth tris[bis(2-ethylhexyl)phosphate].

**3.** A catalytic system according to Claim 2, **characterised in that** said salt is neodymium tris[bis(2-ethylhexyl)phosphate].

**4.** A catalytic system according to one of the preceding claims, **characterised in that** it comprises said rare earth metal or metals in a concentration equal to or substantially equal to 0.02 mol/l.

**5.** A catalytic system according to one of the preceding claims, **characterised in that** said salt exhibits a mass content of rare earth metal or metals ranging from 12.0 to 13.5%, determined both by complexometric back-titration with ethylenediaminetetraacetic acid that consists in a back-titration with neodymium complexation, in an excess of ethylenediaminetetraacetic, in which it is titrated in excess at PH=4.6 with zinc sulphate and using a colored indicator for the photometric determination of the equivalence point, and by inductively-coupled plasma atomic emission spectrometry that consists in the observation of rays of wavelength of from 406.109 nm to 401.225 nm, emitted by excited neodymium atoms in a plasma after calibration with "control" neodymium salts exhibiting a known content in neodymium.

**6.** A catalytic system according to one of the preceding claims, **characterised in that** the "halogen donor:salt" molar ratio exhibits a value ranging from 2.2 to 3.

**7.** A catalytic system according to one of the preceding claims, **characterised in that** the "conjugated diene monomer: salt" molar ratio exhibits a value ranging from 25 to 50.

**8.** A catalytic system according to one of the preceding claims, **characterised in that** said "alkylating agent:rare earth salt" molar ratio exhibits a value ranging from 1 to 2.

**9.** A catalytic system according to one of the preceding claims, **characterised in that** said conjugated diene monomer is butadiene.

**10.** A catalytic system according to one of the preceding claims, **characterised in that** said alkylating agent is diisobutylaluminium hydride.

**11.** A catalytic system according to one of the preceding claims, **characterised in that** said halogen donor is diethylaluminium chloride.

**12.** A process for the preparation of a catalytic system according to one of the preceding claims, **characterised in that** it consists:

- in a first stage, of preparing a suspension of said salt in said solvent,
- in a second stage, of adding said conjugated diene monomer to said suspension,
- in a third stage, of adding said alkylating agent to said suspension comprising said monomer to obtain an alkylated salt, and
- in a fourth stage, of adding said halogen donor to said alkylated salt.

**13.** A process for the preparation of diene elastomers consisting in reacting a catalytic system in an inert hydrocarbon solvent and in the presence of a conjugated diene to be polymerised, **characterised in that** said process consists in using a catalytic system according to one of claims 1 to 11.

**14.** A process for the preparation of diene elastomers according to Claim 13, **characterised in that** it consists in homopolymerising isoprene at a temperature ranging from 25˚C to 55˚C in order to obtain polyisoprenes exhibiting cis-1,4 linkage contents, measured both by carbon 13 nuclear magnetic resonance and mid-infrared analysis, as disclosed in Exhibit I, which fall within a range from 98.0% to 98.5%.

**15.** A process for the preparation of diene elastomers according to Claim 13, **characterised in that** it consists in homopolymerising or copolymerising butadiene at a temperature ranging from 25˚C to 100˚C with the assistance of a catalytic system based on at least:

- a conjugated diene monomer,
- an organic phosphoric acid salt of one or more rare earth metals,
- an alkylating agent consisting of an alkylaluminium of the formula $AlR_3$ or $HAlR_2$, and
- a halogen donor consisting of an alkylaluminium halide,

said salt being suspended in at least one inert and saturated aliphatic or alicyclic hydrocarbon solvent, the "alkylating agent:rare earth salt" molar ratio ranging from 1 to 5 and said salt exhibiting a mass content of rare earth metal or metals ranging from 12.0 to 13.5%, said content being determined both by complexometric back titration with ethylenediaminetetraacetic acid that consists in a back-titration with neodymium complexation, in an excess of ethylenediaminetetraacetic, in which it is titrated in excess at PH=4.6 with zinc sulphate and using a colored indicator for the photometric determination of the equivalence point, and by inductively-coupled plasma atomic emission spectrometry that consists in the observation of rays of wavelength of from 406.109 nm to 401.225 nm, emitted by excited neodymium atoms in a plasma after calibration with "control" neodymium salts exhibiting a known content in neodymium,
in order to obtain homopolymers or copolymers of butadiene simultaneously exhibiting a Mooney viscosity ML(1+4) at 100˚C of greater than or equal to 40, measured in accordance with Standard ASTM D 1646, and a polydispersity index of less than 2.5, measured by size exclusion chromatography.

**Patentansprüche**

1. Katalytisches System, das zur Herstellung von Dienelastomeren durch Polymerisation verwendet werden kann, auf Basis von mindestens:

   - einem konjugierten Dienmonomer,
   - einem Seltenerdmetallsalz einer organischen Phosphorsäure mit einem oder mehreren Seltenerdmetallen,
   - einem Alkylierungsmittel, das aus einer unter Trialkylaluminiumverbindungen und Dialkylaluminiumhydriden ausgewählten Alkylaluminiumverbindung besteht, und
   - einem Halogendonor, der aus einem Alkylaluminiumhalogenid besteht,

   **dadurch gekennzeichnet, daß** das Salz in Suspension in mindestens einem inerten und gesättigten Kohlenwasserstoff-Lösungsmittel vom aliphatischen oder alicyclischen Typ vorliegt, wobei das Molverhältnis (Alkylierungsmittel/Seltenerdmetallsalz) einen Wert von 1 bis 5 aufweisen kann.

2. Katalytisches System nach Anspruch 1, **dadurch gekennzeichnet, daß** es sich bei dem Salz um ein Seltenerdmetalltris[bis(2-ethylhexyl)phosphat] mit einem oder mehreren Seltenerdmetallen handelt.

3. Katalytisches System nach Anspruch 2, **dadurch gekennzeichnet, daß** es sich bei dem Salz um ein Neodymtris[bis(2-ethylhexyl)phosphat] handelt.

4. Katalytisches System nach einem der vorhergehenden Ansprüche, **dadurch gekennzeichnet, daß** es das Seltenerdmetall bzw. die Seltenerdmetalle in einer Konzentration von 0,02 mol/l enthält.

5. Katalytisches System nach einem der vorhergehenden Ansprüche, **dadurch gekennzeichnet, daß** das Salz einen Massengehalt an Seltenerdmetall(en) von 12,0 bis 13,5%, bestimmt sowohl mit Hilfe der Technik der komplexometrischen Rücktitration mit Ethylendiamintetraessigsäure, die aus einer Rücktitration mit Komplexierung des Neodyms mit einem Überschuß an Ethylendiamintetraessigsäure, wobei der Überschuß bei pH = 4,6 mit Zinksulfat quantitativ bestimmt wird, und der Verwendung eines farbigen Indikators mit photometrischer Detektion des Äquivalenzpunkts besteht, als auch mit Hilfe der Technik der Atomemissionsspektroskopie mit induktiv gekoppeltem Plasma, die aus der Beobachtung von Spektrallinien mit einer Wellenlänge von 406,109 nm und 401,225 nm, die von in einem Plasma in einen angeregten Zustand angehobenen Neodymatomen emittiert werden, nach vorheriger Kalibrierung mit Referenzsalzen von Neodym mit bekanntem Neodymgehalt besteht, aufweist.

6. Katalytisches System nach einem der vorhergehenden Ansprüche, **dadurch gekennzeichnet, daß** das Molverhältnis (Halogendonor/Salz) einen Wert von 2,2 bis 3 aufweist.

7. Katalytisches System nach einem der vorhergehenden Ansprüche, **dadurch gekennzeichnet, daß** das Molverhältnis (konjugiertes Dien/Salz) einen Wert von 25 bis 50 aufweist.

8. Katalytisches System nach einem der vorhergehenden Ansprüche, **dadurch gekennzeichnet, daß** das Molverhältnis (Alkylierungsmittel/Seltenerdmetallsalz) einen Wert von 1 bis 2 aufweist.

9. Katalytisches System nach einem der vorhergehenden Ansprüche, **dadurch gekennzeichnet, daß** es sich bei dem konjugierten Dienmonomer um Butadien handelt.

10. Katalytisches System nach einem der vorhergehenden Ansprüche, **dadurch gekennzeichnet, daß** es sich bei dem Alkylierungsmittel um Diisobutylaluminiumhydrid handelt.

11. Katalytisches System nach einem der vorhergehenden Ansprüche, **dadurch gekennzeichnet, daß** es sich bei dem Halogendonor um Diethylaluminiumchlorid handelt.

12. Verfahren zur Herstellung eines katalytischen Systems nach einem der vorhergehenden Ansprüche, **dadurch gekennzeichnet, daß** man:

    - in einem ersten Schritt eine Suspension des Salzes in dem Lösungsmittel herstellt,
    - in einem zweiten Schritt die Suspenion mit dem konjugierten Dienmonomer versetzt,
    - in einem dritten Schritt die das Monomer enthaltende Suspension mit einem Alkylierungsmittel versetzt, wobei man ein alkyliertes Salz erhält, und
- in einem vierten Schritt das alkylierte Salz mit dem Halogendonor versetzt.

**13.** Verfahren zur Herstellung von Dienelastomeren, bei dem man ein katalytisches System in einem inerten Kohlenwasserstoff-Lösungsmittel und in Gegenwart eines zu polymerisierenden konjugierten Diens zur Reaktion bringt, **dadurch gekennzeichnet, daß** man ein katalytisches System nach einem der Ansprüche 1 bis 11 verwendet.

**14.** Verfahren zur Herstellung von Dienelastomeren nach Anspruch 13, **dadurch gekennzeichnet, daß** man Isopren bei einer Temperatur von 25˚C bis 55˚C zu Polyisoprenen mit einem Gehalt an cis-1,4-Verknüpfungen, gemessen sowohl anhand der Technik der kernmagnetischen Resonanz von Kohlenstoff-13 als auch anhand der Technik der quantitativen Bestimmung mittels Mittelinfrarot gemäß der Beschreibung in Anhang I, der in einem Bereich von 98,0% bis 98,5% liegen kann, homopolymerisiert.

**15.** Verfahren zur Herstellung von Dienelastomeren nach Anspruch 13, **dadurch gekennzeichnet, daß** man Butadien bei einer Temperatur von 25˚C bis 100˚C mit Hilfe eines katalytischen Systems auf Basis von mindestens:

- einem konjugierten Dienmonomer,
- einem Seltenerdmetallsalz einer organischen Phosphorsäure mit einem oder mehreren Seltenerdmetallen,
- einem Alkylierungsmittel, das aus einer Alkylaluminiumverbindung der Formel $AlR_3$ oder $HalR_2$ besteht, und
- einem Halogendonor, der aus einem Alkylaluminiumhalogenid besteht,

wobei das Salz in Suspension in mindestens einem inerten und gesättigten Kohlenwasserstoff-Lösungsmittel vom aliphatischen oder alicyclischen Typ vorliegt, wobei das Molverhältnis (Alkylierungsmittel/Seltenerdmetallsalz) einen Wert von 1 bis 5 aufweisen kann und das Salz einen Massengehalt an Seltenerdmetall(en) von 12,0 bis 13,5%, bestimmt sowohl mit Hilfe der Technik der komplexometrischen Rücktitration mit Ethylendiamintetraessigsäure, die aus einer Rücktitration mit Komplexierung des Neodyms mit einem Überschuß an Ethylendiamintetraessigsäure, wobei der Überschuß bei pH = 4,6 mit Zinksulfat quantitativ bestimmt wird, und der Verwendung eines farbigen Indikators mit photometrischer Detektion des Äquivalenzpunkts besteht, als auch mit Hilfe der Technik der Atomemissionsspektroskopie mit induktiv gekoppeltem Plasma, die aus der Beobachtung von Spektrallinien mit einer Wellenlänge von 406,109 nm und 401,225 nm, die von in einem Plasma in einen angeregten Zustand angehobenen Neodymatomen emittiert werden, nach vorheriger Kalibrierung mit "Referenz"-Salzen von Neodym mit bekanntem Neodymgehalt besteht, aufweist,
zu Homopolymeren von Butadien oder Copolymeren von Butadien, die sowohl eine Mooney-Viskosität ML(1+4) bei 100˚C größer gleich 40, gemessen gemäß ASTM-Norm D 1646, als auch einen Polydispersisätsindex von weniger als 2,5, gemessen mit Hilfe der Technik der Größenausschlußchromatographie, aufweisen, homopolymerisiert oder copolymerisiert.

Fig. 1

EP 1 355 960 B1

Fig. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3794604 A

- JP 60023406 A

**Littérature non-brevet citée dans la description**

- **Y. B. MONAKOV ; Y. R. BIESHEV ; A. A. BERG ; S. R. RAFIKOV.** Compte-rendu de l'Académie des Sciences d'U. R. S. S. 1977, vol. 234
- **O. JUN ; W. FOSONG ; S. ZHIQUAN.** Proceedings of China - U. S. Bilateral Symposium on Polymer Chemistry and Physics. Science Press, 1981, 382-398
- **QUANG THO PHAM ; R. PETIAUD ; H. WATON ; M.F. LLAURO DARRICADES.** Proton and NMR Spectra of Polymers. Penton Press, 1991
- **Y. TANAKA ; Y. TAKEUCHI ; M. KOBAYASHI ; H. TADOKORO.** *Journal of Polymer Science,* 1971, vol. 9 (1), 43-57

- **J.P. KISTEL ; G. FRIEDMAN ; B. KAEMPF.** *Bulletin de la Société Chimique de France,* 1967
- **F. ASSSIOMA ; J. MARCHAL.** *C. R. Acad. Sc. Paris, Ser C,* 1968, vol. 266 (22), 1563-6
- *Ser D,* 1968, vol. 266 (6), 369-72
- **T.F. BANIGAN ; A.J. VERBISCAR ; T.A. ODA.** *Rubber Chemistry and technology,* 1982, vol. 55 (2), 407-15
- **P. GELADI ; B. R. KOWALSKI.** Partial Least Squares regression : a tutorial. *Analytica Chimica Acta,* 1986, vol. 185, 1-17
- **M. TENENHAUS.** La régression PLS - Théorie et pratique. 1998